# EUROPEAN PATENT APPLICATION

(11) **EP 4 080 632 A1**
(43) Date of publication of application: **26.10.2022**
(21) Application number: 21869757.1
(22) Date of filing: 16.09.2021
(51) Int. Cl.: H01M 10/04, H01M 50/528, H01M 50/531, H01M 50/572, H01M 50/166, H01M 50/172

(54) **BUTTON-TYPE SECONDARY BATTERY**

(30) Priority: 18.09.2020 KR 20200120950; 15.09.2021 KR 20210123505
(71) Applicant: LG Energy Solution, Ltd., Seoul 07335 (KR)
(72) Inventor: LIM, Jae Won, Daejeon 34122 (KR); LEE, Yong Gon, Daejeon 34122 (KR); LEE, Je Jun, Daejeon 34122 (KR); MIN, Geon Woo, Daejeon 34122 (KR); CHO, Min Su, Daejeon 34122 (KR); KIM, Min Gyu, Daejeon 34122 (KR); KIM, Hak Kyun, Daejeon 34122 (KR)
(74) Representative: Hoffmann Eitle
(86) International application number: PCT/KR2021/012723
(87) International publication number: WO 2022/060135

(57) **Abstract**

The present invention relates to a button-type secondary battery comprising: an electrode assembly; a lower can configured to accommodate the electrode assembly; an upper can coupled to an opening of the lower can; a gasket configured to insulate the lower can and the upper can from each other; a first tab part configured to connect a first electrode of the electrode assembly to the lower can; and a second tab part configured to connect a second electrode of the electrode assembly to the upper can, wherein the second tab part comprises a second electrode tab and a second lead tab, and the second electrode tab is connected to the second electrode, and the second lead tab connects the second electrode tab to the upper can.

## Description

### CROSS-REFERENCE TO RELATED APPLICATION

The present application claims the benefit of the priority of Korean Patent Application Nos. 10-2020-0120950, filed on September 18, 2020, and 10-2021-0123505, filed on September 15, 2021, which are hereby incorporated by reference in their entirety.

### TECHNICAL FIELD

The present invention relates to a button-type secondary battery, and more particularly, to a button-type secondary battery, in which an electrode tab provided in an electrode assembly is capable of selectively extending in length.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary battery comprises a button-type secondary battery having a high energy density, a high output, and a long lifespan. The button-type secondary battery comprises an electrode assembly, a lower can having an accommodation groove accommodating the electrode assembly, an upper can coupled to the lower can to finish the accommodation groove, and a gasket sealing a gap between the lower can and the upper can.

Also, the electrode assembly has a structure in which a first electrode and a second electrode are sequentially stacked with a separator therebetween. Here, the first electrode is provided with a first electrode tab connected to the lower can, and the second electrode is provided with a second electrode tab connected to the upper can.

Here, one end of the second electrode tab is coupled to a distal end of the second electrode disposed on an outer surface of the electrode assembly, and the other end of the second electrode tab is coupled to a bottom surface of the upper can.

However, the second electrode tab has be secured as long as a set length to connect the second electrode of the electrode assembly to the upper can. In this case, there is a problem in that the second electrode is bent or folded by a weight of the second electrode tab, which is secured in length.

### DISCLOSURE OF THE INVENTION

### TECHNICAL PROBLEM

The present invention is invented to solve the above problems, and an object of the present invention is to provide a button-type secondary battery, in which an electrode tab is improved to be capable of selectively extending in length so as to prevent the electrode assembly from being deformed, and the electrode tab is sufficiently secured in length to stably connect the electrode assembly to an upper can.

### TECHNICAL SOLUTION

A button-type secondary battery according the present invention for achieving the above object comprises: an electrode assembly; a lower can configured to accommodate the electrode assembly; an upper can coupled to an opening of the lower can; a gasket configured to insulate the lower can and the upper can from each other; a first tab part configured to connect a first electrode of the electrode assembly to the lower can; and a second tab part configured to connect a second electrode of the electrode assembly to the upper can, wherein the second tab part comprises a second electrode tab and a second lead tab, and the second electrode tab is connected to the second electrode, and the second lead tab connects the second electrode tab to the upper can.

The second electrode tab may have a length less than that of the second lead tab.

The second electrode tab may have a thickness less than that of the second lead tab.

The second electrode tab and the second lead tab may be coupled to each other through welding in a state in which ends of the second electrode tab and the second lead tab, which correspond to each other, are disposed to partially overlap each other.

The overlapping portion of the second electrode tab and the second lead tab may have a length of 1.5 mm to 10.0 mm.

A protection member having insulation may be attached to the coupled portion of the second electrode tab and the second lead tab.

The second electrode tab may comprise a rear end coupled to the second electrode of the electrode assembly, a front end coupled to the second lead tab, and a withdrawal end disposed between the rear end and the front end and disposed on a surface of the electrode assembly, which corresponds to the upper can, and a length from the withdrawal end to the front end of the second electrode tab may be equal to or less than a width of the second electrode tab or the second lead tab.

The second electrode tab and the second lead tab may be made of materials different from each other.

The second electrode tab may be made of a metal material that is lighter than the second lead tab.

The second lead tab may be made of a metal material having flexibility.

The first tab part may comprise a first electrode tab and a first lead tab, and the first electrode tab may be connected to the first electrode, and the first lead tab may connect the first electrode tab to the lower can.

The first electrode tab may have a length less than that of the first lead tab.

### ADVANTAGEOUS EFFECTS

The button-type secondary battery according to the present invention may comprise the electrode assembly, the lower can, the upper can, the gasket, the first tab part, and the second tab part. The second tab part may comprise the second electrode tab and the second lead tab, The second electrode tab may be connected to the second electrode of the electrode assembly, and the second lead tab may connect the second electrode tab to the upper can. Due to this characteristic, when the electrode assembly is manufactured, since only the second electrode tab of the second tab part is connected to the second electrode, the second tab part may be minimized in weight to prevent the second electrode or the electrode assembly from being deformed by the second tab part. In addition, when the electrode assembly and the upper can are coupled to each other, the length of the second tab part may be sufficiently secured by bonding the second lead tab to the second electrode tab, thereby stably connecting the electrode assembly to the upper can.

### BRIEF DESCRIPTION OF THE DRAWINGS

FIG. 1 is an exploded perspective view of a button-type secondary battery according to a first embodiment of the present invention.
FIG. 2 is a cross-sectional view illustrating a state in which an upper can is opened in the button-type secondary battery according to the first embodiment of the present invention.
FIG. 3 is a cross-sectional view illustrating a state in which the upper can is coupled in the button-type secondary battery according to the first embodiment of the present invention.
FIG. 4 is a side view illustrating another example of a second tab part provided in the button-type secondary battery according to an embodiment of the present invention.
FIG. 5 is a side view illustrating further another example of the second tab part provided in the button-type secondary battery according to an embodiment of the present invention.
FIG. 6 is an enlarged view illustrating a portion of FIG. 3.
FIG. 7 is a cross-sectional view of a button-type secondary battery according to a second embodiment of the present invention.
FIG. 8 is a cross-sectional view of a button-type secondary battery according to a third embodiment of the present invention.
FIG. 9 is a side view of a button-type secondary battery according to a fourth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Button-type secondary battery according to first embodiment of the present invention]

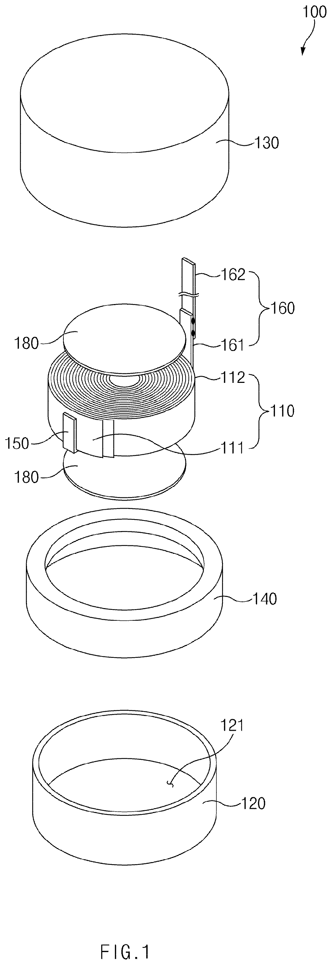

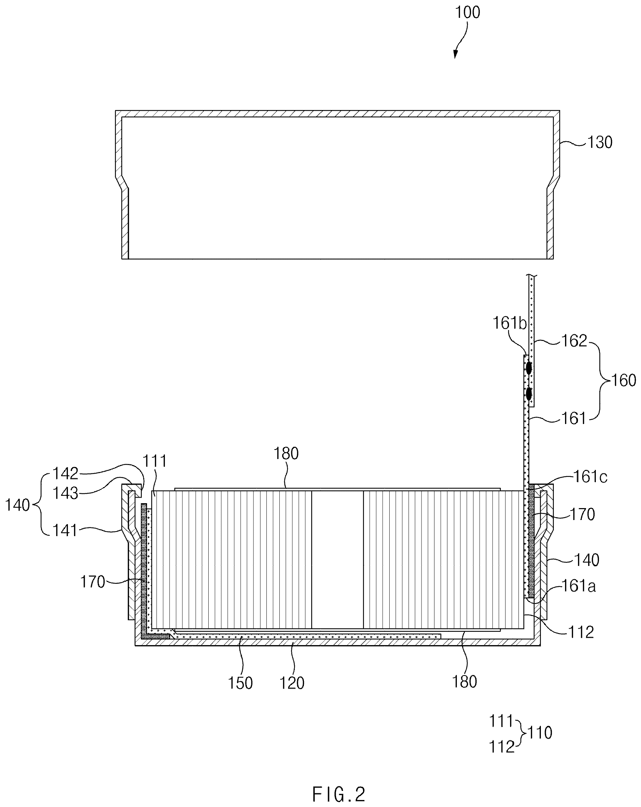

As illustrated in FIGS. 1 to 6, a button-type secondary battery 100 according to a first embodiment of the present invention is a secondary battery having a diameter greater than a length thereof and comprises an electrode assembly 110, a lower can 120 accommodating the electrode assembly 110, an upper can 130 coupled to an opening of the lower can 120, a gasket 140 sealing a gap between the lower can 120 and the upper can 130 and insulating the lower can 120 from the upper can 130, a first tab part 150 connecting a first electrode 111 of the electrode assembly 110 to the lower can 120, and a second tab part 160 connecting a second electrode 112 of the electrode assembly to the upper can 130.

The electrode assembly 110 has a structure in which the first electrode 111 and the second electrode 112 are alternately disposed with a separator therebetween and is wound in a shape of a jelly-roll.

Here, a distal end of the first electrode 111 and a distal end of the second electrode 112 are disposed on the outermost sides of the electrode assembly 110, respectively. The first tab part 150 is coupled to a distal end of the first electrode 111, and a second tab part 160 is coupled to a distal end of the second electrode 112.

The first electrode is a negative electrode, and the second electrode is a positive electrode and vice versa.

An accommodation groove 121 accommodating the electrode assembly 110 is formed in the lower can 120, and the first tab part 150 is coupled to a bottom surface of the accommodation groove 121.

The upper can 130 is coupled to a top surface of the lower can to finish the accommodation groove 121.

The gasket 140 is configured to seal the gap between the lower can and the upper can and insulate the lower can and the upper can from each other and comprises an outer gasket 141 provided between an outer circumferential surface of the lower can 120 and an inner circumferential surface of the upper can 130, an inner gasket 142 that is in close contact with an inner circumferential surface of the lower can 120, and a connection gasket 143 connecting the outer gasket 141 to the inner gasket 142.

The first tab part 150 is configured to connect the first electrode provided in the electrode assembly to the lower can and has one end coupled to a distal end of the first electrode 111 provided in the electrode assembly 110 and the other end coupled to a bottom surface of the lower can 120.

The second tab part 160 is configured to connect the second electrode provided in the electrode assembly to the upper can and has one end coupled to a distal end of the second electrode 112 provided in the electrode assembly 110 and the other end coupled to the upper can 130.

The distal end of the second electrode 112 may be deformed while being bent or folded due to a weight of the second tab 160.

Thus, the second tab part 160 of the button-type secondary battery 100 according to the first embodiment of the present invention has a structure that is capable of selectively extending in length. That is, since the second tab part 160 comprises a second electrode tab and a second lead tab to prevent the second electrode 112 from being deformed and improve coupling properties between the electrode assembly 110 and the upper can 130.

That is, the second tab part 160 has a structure in which the second electrode tab is coupled to the distal end of the second electrode 112 of the electrode assembly 110, and then, the second lead tab is bonded to the second electrode tab. Thus, the second tab part may selectively extend in length.

For example, the second tab part 160 has a structure comprising a second electrode tab 161 and a second lead tab 162. Here, the second electrode tab 161 is connected to the distal end of the second electrode 112 of the electrode assembly 110, and the second lead tab 162 connects the second electrode tab 161 to the upper can 130. In addition, the second electrode tab 161 and the second lead tab 162 may be bonded to each other so that the second tab part extends in length.

That is, the second electrode tab 161 may be connected only to the second electrode 112 of the electrode assembly 110 to significantly reduce the self-weight of the second tab part 160, thereby preventing the electrode assembly from being deformed. Also, when the electrode assembly and the upper can are connected to each other, the second lead tab 162 may be bonded to the second electrode tab 161, and then, a front end of the second electrode lead may be connected to the upper can to sufficiently secure the length of the second tab part, thereby stably connecting the electrode assembly to the upper can.

In more detail, the second tab 160 may connect only the second electrode tab 161 to the distal end of the second electrode 112 of the electrode assembly 110 to minimize the length and self-weight of the second tab part 160, thereby preventing the distal end of the second electrode 112 of the electrode assembly 110 from being deformed. When it is required to connect the electrode assembly 110 to the upper can 130, the length of the second tab part 160 may extend by the length of the second lead tab 162 by connecting the second lead tab 162 to the second electrode tab 161 to stably connect the electrode assembly 110 to the upper can 130.

Thus, the button-type secondary battery 100 according to the first embodiment of the present invention may comprise the second tab part 160 provided with the second electrode tab 161 and the second lead tab 162 to prevent the electrode assembly 110 from being deformed, thereby stably connecting the electrode assembly 110 to the upper can 130.

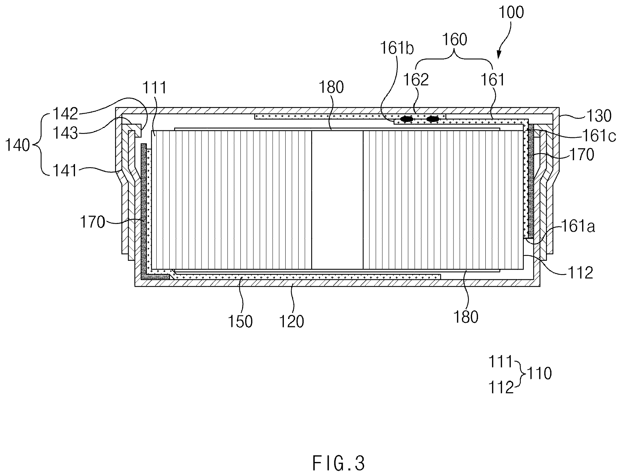

Referring to FIG. 3, the second electrode tab 161 has a length less than that of the second lead tab 162. Thus, the length of the second electrode tab 161 coupled to the distal end of the second electrode 112 of the electrode assembly 110 may be significantly reduced to prevent the electrode assembly from being deformed.

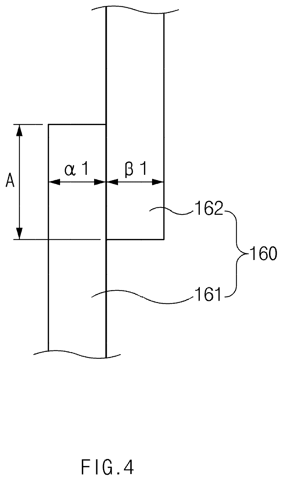

Referring to FIG. 4, a thickness α1 of the second electrode tab 161 is less than a thickness β1 of the second lead tab 162. Thus, the self-weight of the second electrode tab 161 may be significantly reduced to significantly prevent the electrode assembly from being deformed.

The second electrode tab 161 and the second lead tab 162 may be made of different metal materials through which are electrically conductive. That is, the second electrode tab 161 may be made of a metal material that is lighter than the second lead tab 162. Thus, the self-weight of the second electrode tab 161 may be significantly reduced to significantly prevent the electrode assembly from being deformed.

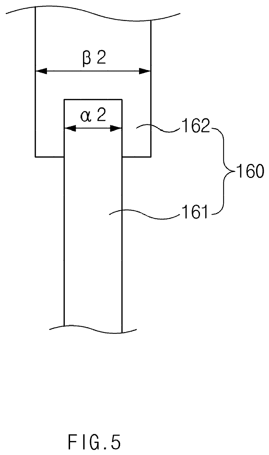

Referring to FIG. 5, the second electrode tab 161 and the second lead tab 162 have the same thickness, and a width α2 of the second electrode tab 161 is less than a width β2 of the second lead tab 162. Thus, the self-weight of the second electrode tab 161 may be significantly reduced to significantly prevent the electrode assembly from being deformed.

The second electrode tab 161 and the second lead tab 162 are disposed to partially overlap each other, and then, the overlapping portion of the second electrode tab 161 and the second lead tab 162 may be coupled to each other through welding. Thus, coupling force between the second electrode tab 161 and the second lead tab 162 may increase.

Referring to FIG. 4, a length of the overlapping portion A of the second electrode tab 161 and the second lead tab 162 is 1.5 mm to 10.0 mm, preferably 2.0 mm to 4.0 mm. The optimal length of the overlapping portion A is formed to be 2.5 mm. Here, if the length of the overlapping portion A is 1.5 mm or less, the welding is difficult, and if the length of the overlapping portion A is 10.0 mm or more, there is a problem in that the self-weight of the second tab part unnecessarily increases.

The second electrode tab 161 comprises a rear end 161a coupled to the distal end of the second electrode 112 disposed outside the electrode assembly 110, a front end 161b coupled to the second lead tab 162, and a withdrawal end 161c disposed between the rear end 161a and the front end 161b to match a surface of the electrode assembly 110 facing the upper can 130.

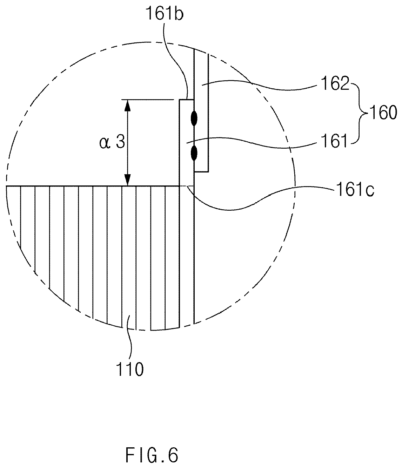

Referring to FIG. 6, a length α3 from the withdrawal end 161c to the front end 161b of the second electrode tab 161 is equal to or less than a width of the second electrode tab 161 or the second lead tab 162. Particularly, each of the second electrode tab 161 and the second lead tab 162 has a length that is equal to the width of the second electrode tab 161 or the second lead tab 162 to stably perform the welding.

For example, the length α3 from the withdrawal end 161c to the front end 161b of the second electrode tab 161 may be 10 mm to 40 mm. Thus, the length of the second electrode tab 161 withdrawn from the surface of the electrode assembly may be uniform, and as a result, uniformity of the product may be improved.

The length α3 from the withdrawal end 161c to the front end 161b of the second electrode tab 161 has a length corresponding to 30% to 50% of a diameter of the electrode assembly. Preferably the length α3 has a length corresponding to 40%. That is, when the length α3 from the withdrawal end 161c to the front end 161b of the second electrode tab 161 is greater than 50% of the diameter of the electrode assembly, the self-weight of the second electrode tab may increase to cause deformation of the electrode assembly.

The rear end of the second lead tab overlapping the second electrode tab may extend up to the rear end 161a of the second electrode tab and may be bonded to the rear end of the second electrode tab. Thus, strength of the second electrode tab may be reinforced, and as a result, the deformation such as bending of the second electrode tab may be prevented.

The second lead tab 162 may be made of a flexible metal material. Thus, when the electrode assembly and the upper can are coupled to each other, the second lead tab 162 may be stably bent, and as a result, the breakage or folding of the second lead tab 162 may be prevented.

The insulating tape 170 for improving insulation properties is attached to the first tab part 150 and the second tab part 160, and the insulating tape 170 is attached to surround the first tab part 150 or the second tab part 160 to prevent short circuit from occurring.

An insulator 180 is provided between the electrode assembly 110 and the lower can 120 or between the electrode assembly 110 and the upper can 130, and the insulator 180 insulates the first electrode of the electrode assembly from the second tab part and insulates the second electrode of the electrode assembly from the first tab part.

Therefore, the button-type secondary battery 100 according to the first embodiment of the present invention comprises the second tab part provided with the second electrode tab and the second lead tab. Thus, when the secondary battery is manufactured, the length of the second tab part may selectively extend to prevent the electrode assembly from being deformed, thereby stably connecting the electrode assembly to the upper can.

Hereinafter, in descriptions of another embodiment of the present invention, constituents having the same function as the above-mentioned embodiment have been given the same reference numeral in the drawings, and thus duplicated description will be omitted.

### [Button-type secondary battery according to second embodiment of the present invention]

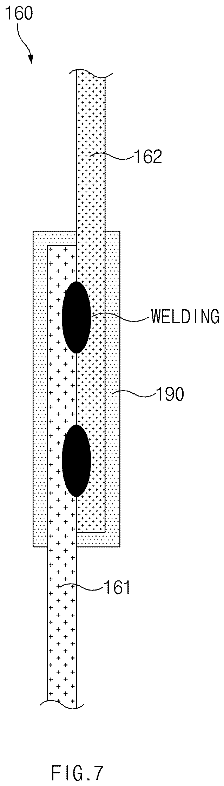

As illustrated in FIG. 7, a button-type secondary battery 100 according to a second embodiment of the present invention comprises a second tab part 160 provided with a second electrode tab 161 and a second lead tab 162, and the second electrode tab 161 and the second lead tab 162 are coupled to each other through welding in a state in which ends of the second electrode tab 161 and the second lead tab 162, which correspond to each other, overlap each other.

Here, the button-type secondary battery 100 according to the second embodiment of the present invention comprises a protection member 190 for improving insulation properties with respect to a coupled portion between the second electrode tab 161 and the second lead tab 162, and the protection member 190 is attached to surround the coupled portion of the second electrode tab 161 and the second lead tab 162.

The protection member 190 may be a silicone tape.

Therefore, the button-type secondary battery 100 according to the second embodiment of the present invention comprises the protection member 190 to prevent the electrode assembly from being damaged by the coupled portion of the second electrode tab 161 and the second lead tab 162 and also prevent the coupled portion of the second electrode tab 161 and the second lead tab 162 from being in contact with the first electrode.

### [Button-type secondary battery according to third embodiment of the present invention]

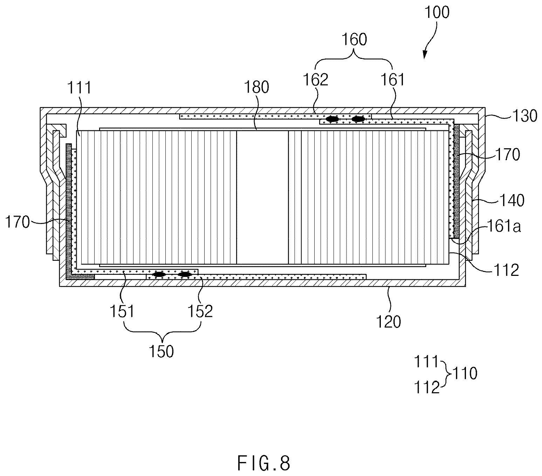

As illustrated in FIG. 8, a button-type secondary battery 100 according to a third embodiment of the present invention comprises a first tab part connecting a first electrode 111 of an electrode assembly 110 to a lower can 120.

The first tab part 150 comprises a first electrode tab 151 and a first lead tab 152. Here, the first electrode tab 151 is connected to the first electrode 111, and the first lead tab 152 connects the first electrode tab 151 to the lower can 120.

Therefore, in the button-type secondary battery 100 according to the third embodiment of the present invention, a length of the first tab part 150 may selectively extend to stably connect the electrode assembly 110 to the lower can 120.

The first electrode tab 151 has a length less than that of the first lead tab 152. Thus, it is possible to prevent the electrode assembly from being deformed by a self-weight of the first electrode tab 151.

The first electrode tab 151 may have a thickness less than that of the first lead tab 152, and the first electrode tab 151 may have a width greater than that of the first lead tab 152. This has an effect of reducing the self-weight of the first tab part, and as a result, it is possible to prevent the electrode assembly from being deformed.

### [Button-type secondary battery according to fourth embodiment of the present invention]

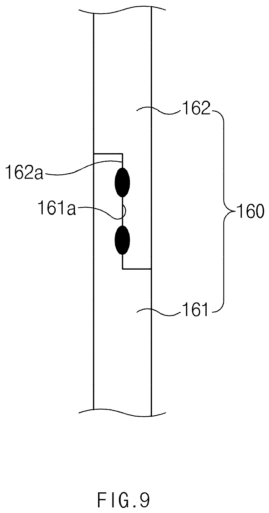

As illustrated in FIG. 9, a button-type secondary battery 100 according to a fourth embodiment of the present invention comprises a second tab part 160 provided with a second electrode tab 161 and a second lead tab 162.

Here, a lower groove 161a is formed in an end of the second electrode tab 161, and an upper groove 162a fitted to the lower groove 161a is formed in an end of the second lead tab 162.

That is, the lower groove 161a is formed to be opened toward an end of the second electrode tab 161. The upper groove 162a is formed to be opened toward an end of the second lead tab 162. Thus, since the second electrode tab 161 and the second lead tab 162 are coupled to each other through the lower groove 161a and the upper groove 162a, an increase in thickness of the second electrode tab part may be minimized.

Therefore, in the button-type secondary battery 100 according to the fourth embodiment of the present invention, coupling force between the second electrode tab 161 and the second lead tab 162 may increase through the coupling of the lower groove 161a and the upper groove 162a, and particularly, the increase in thickness of the second electrode tab part may be prevented.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

- 100:: Button-type secondary battery
- 110:: Electrode assembly
- 111:: First electrode
- 112:: Second electrode
- 120:: Lower can
- 121:: Accommodation groove
- 130:: Upper can
- 140:: Gasket
- 141:: Outer gasket
- 142:: Inner gasket
- 143:: Connection gasket
- 150:: First tab part
- 160:: Second tab part
- 161:: Second electrode tab
- 162:: Second lead tab
- 170:: Insulating tape
- 180:: Insulator
- 190:: Protection member

## Claims

1. A button-type secondary battery comprising:
an electrode assembly;
a lower can configured to accommodate the electrode assembly;
an upper can coupled to an opening of the lower can;
a gasket configured to insulate the lower can and the upper can from each other;
a first tab part configured to connect a first electrode of the electrode assembly to the lower can; and
a second tab part configured to connect a second electrode of the electrode assembly to the upper can,
wherein the second tab part comprises a second electrode tab and a second lead tab, and
the second electrode tab is connected to the second electrode, and the second lead tab connects the second electrode tab to the upper can.

2. The button-type secondary battery of claim 1, wherein the second electrode tab has a length less than that of the second lead tab.

3. The button-type secondary battery of claim 1, wherein the second electrode tab has a thickness less than that of the second lead tab.

4. The button-type secondary battery of claim 1, wherein the second electrode tab and the second lead tab are coupled to each other through welding in a state in which ends of the second electrode tab and the second lead tab, which correspond to each other, are disposed to partially overlap each other.

5. The button-type secondary battery of claim 4, wherein the overlapping portion of the second electrode tab and the second lead tab has a length of 1.5 mm to 10.0 mm.

6. The button-type secondary battery of claim 1, wherein a protection member having insulation is attached to the coupled portion of the second electrode tab and the second lead tab.

7. The button-type secondary battery of claim 1, wherein the second electrode tab comprises a rear end coupled to the second electrode of the electrode assembly, a front end coupled to the second lead tab, and a withdrawal end disposed between the rear end and the front end and disposed on a surface of the electrode assembly, which corresponds to the upper can, and
a length from the withdrawal end to the front end of the second electrode tab is equal to or less than a width of the second electrode tab or the second lead tab.

8. The button-type secondary battery of claim 1, wherein the second electrode tab and the second lead tab are made of materials different from each other.

9. The button-type secondary battery of claim 8, wherein the second electrode tab is made of a metal material that is lighter than the second lead tab.

10. The button-type secondary battery of claim 8, wherein the second lead tab is made of a metal material having flexibility.

11. The button-type secondary battery of claim 1, wherein the first tab part comprises a first electrode tab and a first lead tab, and
the first electrode tab is connected to the first electrode, and the first lead tab connects the first electrode tab to the lower can.

12. The button-type secondary battery of claim 11, wherein the first electrode tab has a length less than that of the first lead tab.
